(19) Europäisches Patentamt / European Patent Office / Office européen des brevets

(11) **EP 3 007 349 B1**

(12) **FASCICULE DE BREVET EUROPEEN**

(45) Date de publication et mention de la délivrance du brevet:
**01.12.2021 Bulletin 2021/48**

(51) Int Cl.:
***H02M 7/48*** *(2007.01)*

(21) Numéro de dépôt: **15188476.4**

(22) Date de dépôt: **06.10.2015**

(54) **CIRCUIT ÉLECTRIQUE TRANSFORMATEUR ET INSTALLATION COMPORTANT UN TEL CIRCUIT**

ELEKTRISCHER TRANSFORMATORSCHALTKREIS, UND ANLAGE, DIE EINEN SOLCHEN SCHALTKREIS UMFASST

ELECTRICAL TRANSFORMER CIRCUIT AND INSTALLATION COMPRISING SUCH A CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2014 FR 1459661**

(43) Date de publication de la demande:
**13.04.2016 Bulletin 2016/15**

(73) Titulaire: **Schneider Electric Industries SAS**
**92500 Rueil-Malmaison (FR)**

(72) Inventeur: **HERRIOT, Yann**
**38050 GRENOBLE CEDEX 9 (FR)**

(74) Mandataire: **Brevalex**
**95, rue d'Amsterdam**
**75378 Paris Cedex 8 (FR)**

(56) Documents cités:
**WO-A1-95/30172        WO-A1-2012/162581**
**WO-A2-2008/116042      CN-A- 103 595 258**
**US-A1- 2009 322 307    US-A1- 2013 270 919**
**US-A1- 2014 268 898**

**Description**

**DOMAINE TECHNIQUE**

L'invention se rapporte au domaine de la connexion d'équipements électriques à des réseaux électriques quel que soit leur type. Ce type d'équipements électriques peut être soit du type charge électrique, tels que des batteries, soit du type source électrique, tels que des générateurs d'énergie renouvelable, ou soit du type pouvant être par alternance une charge et une source électrique, tels que certaines batteries ou encore des super condensateurs.

**ÉTAT DE LA TECHNIQUE ANTÉRIEURE**

La connexion d'un équipement électrique, quel que soit son type, à un réseau électrique présentant une tension de fonctionnement différente de celle de l'équipement électrique nécessite généralement un circuit électrique transformateur adapté.

En effet, que ce soit pour l'alimentation de l'équipement électrique, ou que ce soit pour que l'équipement électrique transmette de l'énergie électrique au réseau, une adaptation de tension et/ou une isolation galvanique sont nécessaire. Ceci est d'autant plus vrai lorsque l'équipement est un équipement fonctionnant avec une tension continue et que le réseau électrique fonctionne avec une tension alternative. Ce type de circuit transformateur est donc pleinement nécessaire dans le développement des équipements d'énergie renouvelable tels que les éoliennes, les capteurs photovoltaïques ou encore les stations de stockage d'énergie associées aux générateurs d'énergie renouvelable.

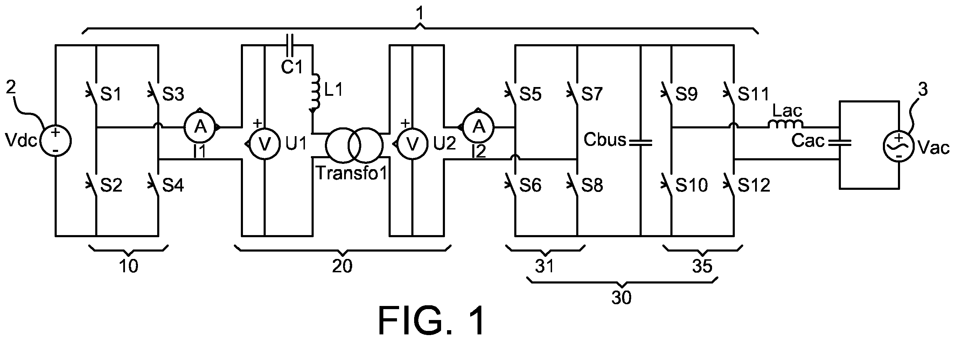

Dans ce dernier cas, c'est-à-dire la connexion d'un équipement électrique fonctionnant avec une tension continue à un réseau électrique de tension alternative de fréquence $f2$, un circuit électrique transformateur comporte comme illustré sur la figure 1 :

- un premier convertisseur 10 en tension adapté pour connecter l'équipement électrique 2 à une partie du circuit électrique 20 fonctionnant avec une tension alternative de fréquence $f0$, ce premier convertisseur 10 étant un onduleur dans le cas où l'équipement électrique 2 est une charge et un convertisseur de tension alternative/continue dans le cas où l'équipement électrique 2 est une source électrique,
- un transformateur 20 relié au premier convertisseur en tension et configuré pour adapter l'amplitude de la tension alternative de fréquence $f0$ du premier convertisseur 10 par rapport à l'amplitude de la tension du réseau électrique 3, ledit transformateur 20 comportant une bobine primaire reliée au premier convertisseur 10 et une bobine secondaire, lesdites bobines primaire et secondaire étant agencées solidaires en déplacement, le dit transformateur étant possiblement complété par un circuit résonant 21, placé du côté primaire ou secondaire,
- un deuxième convertisseur 30 relié à la bobine secondaire adapté pour la relier la bobine secondaire au réseau électrique 3.

Ce deuxième convertisseur 30, afin de séparer la fréquence $f0$ de celle du circuit du réseau électrique 3 comporte un onduleur et un convertisseur tension alternative/continue fonctionnant, dans le cas illustré sur la figure 1 sur le principe du découpage. Ainsi, dans le cas où l'équipement électrique 2 est une charge électrique, le deuxième convertisseur 30 comprend un onduleur 31 relié à la bobine secondaire du transformateur 20 et un convertisseur de tension alternative/continue 35 reliant l'onduleur au réseau électrique 3. Dans le cas où l'équipement électrique 2 est un générateur, le deuxième convertisseur 30 comprend un convertisseur de tension alternative/continue relié à la bobine secondaire du transformateur et un onduleur reliant le convertisseur de tension alternative/continue au réseau électrique 3.

Il est à noter qu'un tel circuit peut également être adapté pour des équipements électriques qui peuvent être tour à tour une charge électrique et une source électrique, tels que des batteries, en utilisant un premier et un deuxième convertisseur bidirectionnel.

On entend ci-dessus et dans le reste de ce document par équipement électrique aussi bien un équipement de type source de tension, tel qu'un ou plusieurs panneaux photovoltaïques ou une éolienne équipée d'un étage redresseur, qu'un équipement de type charge électrique, tel qu'un système de chauffage d'un ou plusieurs panneaux photovoltaïques, ou qu'un équipement pouvant être tour à tour source ou charge électrique tel qu'un système de stockage d'énergie (par exemple des batteries reliées ensembles).

Afin d'optimiser les rendements du transformateur et limiter les perturbations introduites par les conversions de signal aussi bien au niveau de l'équipement électrique qu'au niveau du réseau électrique, il est préférable que la fréquence $f0$ du transformateur soit bien plus élevée que la fréquence du réseau électrique $f2$. Néanmoins les fréquences $f0$ atteignables par un tel transformateur de l'art antérieur se heurtent à certaines limites technologiques et de coût.

En effet, le transformateur doit à la fois fournir un bon rendement de transformation tout en assurant une bonne isolation galvanique entre l'équipement électrique et le réseau électrique et ceci avec une dimension du transformateur qui reste raisonnable. Pour ces raisons, de tels circuits sont limités à des fréquences de l'ordre du kilohertz et présente donc une compacité et un rendement de transformation limité.

Un autre exemple d'art antérieur est le document WO 2012/162581 A1.

## EXPOSÉ DE L'INVENTION

L'invention a pour but de remédier à ces inconvénients et a ainsi plus particulièrement pour but de fournir un circuit électrique transformateur pour relier un équipement électrique à un réseau électrique qui, tout en conservant des dimensions raisonnables, puisse offrir un bon rendement de conversion et une bonne isolation galvanique avec une haute fréquence de fonctionnement.

A cet effet l'invention concerne un circuit électrique transformateur pour relier un équipement électrique, tel qu'un générateur à base d'énergie renouvelable ou un système de stockage d'énergie, à un réseau électrique, tel que défini dans la revendication 1. Les modes de réalisation préférés sont définis dans les revendications dépendantes. L'invention est défini dans le jeu de revendications.

Un tel circuit électrique transformateur présente l'avantage de permettre d'obtenir une transformation à une fréquence élevée pouvant aisément atteindre la dizaine de kilohertz, ceci avec des dimensions raisonnables et sans que l'isolation galvanique n'en pâtisse puisque celle-ci est assurée par l'utilisation d'un transformateur faiblement couplé. De plus, le rendement de transformation est conservé grâce à une transformation qui est réalisée à la résonnance. Ainsi un tel circuit peut être compact tout en offrant une bonne isolation galvanique et un bon rendement de transformation.

On notera, de plus que, lorsque le premier et le deuxième convertisseur sont bidirectionnels, ce circuit permet de relier à un réseau électrique aussi bien un équipement de type charge électrique qu'un équipement de type source électrique et qu'un équipement pouvant être tour à tour une charge électrique et une source électrique.

Le couplage magnétique d'un transformateur est défini par la formule mathématique suivante :

$$(1) \quad Kmag = \frac{M}{\sqrt{L1 \times L2}}$$

Avec M le rapport de transformation du transformateur, L1 et L2 étant les valeurs d'inductance respective de la première et deuxième bobine du transformateur, généralement connue sous la dénomination bobines primaire et secondaire.

On entend ci-dessus et dans le reste de ce document par adaptation d'amplitude entre une première et une deuxième tension soit :

- dans le cas où la première et la deuxième tension sont toutes deux des tensions alternatives, une adaptation d'amplitude en tant que telle,
- dans le cas où la première tension est une tension continue et la deuxième tension est une tension alternative, une adaptation entre la valeur de la première tension et l'amplitude de la deuxième tension,
- dans le cas où la première et la deuxième tension sont toutes deux des tensions continues, une adaptation de valeur entre la première et la deuxième tension,
- dans le cas où la première tension est une tension alternative et la deuxième tension est une tension continue, une adaptation entre l'amplitude de la première tension et la valeur de la deuxième tension.

Ainsi, plus généralement, on entend par « amplitude » d'une tension continue sa valeur.

Le couplage magnétique entre la première bobine et la deuxième bobine peut être de l'ordre ou inférieur à 0,5.

Le transformateur peut être un transformateur du type dans l'air.

Ce type de transformateur ne comportant pas de noyau magnétique entre les deux bobines, l'isolation galvanique entre la première et la deuxième bobine peut être optimisée sans augmentation drastique des dimensions du transformateur.

La fréquence *f0* peut être une fréquence supérieure à 1 kHz préférentiellement supérieure à 5 kHZ, voire 10 kHz.

Une telle fréquence de fonctionnement du transformateur permet de fournir un bon rendement de transformation.

L'équipement électrique peut être un équipement électrique fonctionnant avec une tension continue qui est soit une charge électrique, telle qu'une batterie, soit une source électrique, telle qu'un générateur à base d'énergie renouvelable, soit les deux, telles qu'une batterie adaptée pour transmettre de l'énergie au réseau électrique, le premier convertisseur pouvant être :

- dans le cas où l'équipement électrique est une charge électrique, un convertisseur tension alternative en tension continue avec le transformateur en entrée et l'équipement électrique en sortie,
- dans le cas où l'équipement électrique est un générateur, un onduleur avec l'équipement électrique en entrée et le transformateur en sortie,
- dans le cas où l'équipement électrique peut fonctionner aussi bien en source qu'en charge, un convertisseur tension alternative en tension continue bidirectionnelle.

L'équipement électrique peut être un équipement électrique qui est soit une charge électrique, telle qu'une batterie, soit une source électrique, telle qu'un générateur à base d'énergie renouvelable, soit les deux, telles qu'une batterie adaptée pour transmettre de l'énergie au réseau électrique,
et dans lequel le réseau électrique peut être un réseau électrique alternatif de fréquence $f2$, le deuxième convertisseur pouvant être adapté pour :

- dans le cas où l'équipement électrique est une charge électrique, convertir une tension de fréquence $f2$ en une tension de fréquence $f0$, le deuxième convertisseur étant connecté en entrée au réseau électrique et en sortie à la deuxième bobine,
- dans le cas où l'équipement électrique est un générateur, convertir une tension de fréquence $f0$ en une tension $f2$, le deuxième convertisseur étant connecté en entrée à la deuxième bobine et en sortie au réseau électrique,
- dans le cas où l'équipement électrique peut fonctionner aussi bien en source qu'en charge, convertir de manière bidirectionnelle une tension de fréquence $f2$ en une tension de fréquence $f0$.

Le deuxième convertisseur peut comprendre un système de découpage adapté pour fournir à la deuxième bobine une tension alternative de fréquence fondamentale $f0$ et proportionnelle à la tension du réseau électrique résultante d'un filtre passe bas, la commande dudit système de découpage étant indépendante des tensions du réseau électrique et de l'équipement électrique.
Un tel système de découpage permet de fournir un deuxième convertisseur simplifié puisque ne nécessitant pas un circuit de commande synchronisé avec l'une quelconque de la tension du réseau électrique et de la tension de l'équipement électrique.
L'équipement électrique peut être un équipement électrique qui est soit une charge électrique, telle qu'une batterie, soit une source électrique, telle qu'un générateur à base d'énergie renouvelable, soit les deux, telles qu'une batterie adaptée pour transmettre de l'énergie au réseau électrique,
et le réseau électrique peut être un réseau électrique de tension continue, le deuxième convertisseur pouvant être :

- dans le cas où l'équipement électrique est une charge électrique, un onduleur adapté pour fournir à partir de la tension continue du réseau électrique une tension alternative de fréquence $f0$ à la deuxième bobine,
- dans le cas où l'équipement est une source électrique, convertir une tension de fréquence $f0$ en une tension continue, le deuxième convertisseur étant connecté en entrée à la deuxième bobine et en sortie au réseau électrique,
- dans le cas où l'équipement électrique peut fonctionner aussi bien en tant que source électrique qu'en tant que charge électrique, adapté pour une conversion bidirectionnelle d'une tension continue en tension alternative de fréquence $f0$.

Le deuxième convertisseur peut comprendre un système de découpage agencé pour relier le réseau électrique et la deuxième bobine uniquement lors des alternances positives de la tension alternative de fréquence $f0$ et un filtre passe-bas adapté pour filtrer au moins partiellement les tensions de fréquence $f0$.
Un tel deuxième convertisseur permet de fournir un circuit électrique adapté pour relier un réseau électrique à un équipement électrique avec une tension de transformation alternative de fréquence $f0$.
L'invention concerne également une installation électrique comportant :

- un équipement électrique tel qu'un générateur à base d'énergie renouvelable ou un système de stockage d'énergie,
- et un circuit électrique transformateur relié à l'équipement électrique ceci pour relier l'équipement électrique à un réseau électrique,

le circuit électrique étant un circuit électrique selon l'invention.
Une telle installation bénéficie des avantages apportés par un circuit selon l'invention.

## BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :

- la figure 1 illustre schématiquement un exemple de circuit électrique transformateur pour connecter un équipement électrique à un réseau électrique selon l'art antérieur,

- la figure 2 illustre schématiquement un circuit électrique transformateur selon l'invention reliant un équipement électrique à un réseau électrique,
- la figure 3 illustre un schéma de principe du fonctionnement de l'étage transformateur d'un circuit électrique selon l'invention,
- les figures 4A, 4B et 4C illustrent un exemple de tensions de fonctionnement d'un circuit électrique transformateur avec la figure 4A qui illustre le courant en entrée du premier convertisseur alimentant l'équipement électrique , la figure 4B qui représente plus précisément le courant et la tension au niveau de l'étage transformateur correspondant à l'équipement électrique, la figure 4C qui représente le courant et la tension au niveau de l'étage transformateur correspondant au réseau électrique,
- la figure 5 illustre un exemple schématisé de réalisation du circuit électrique de la figure 2,
- la figure 6 illustre schématiquement une variante du circuit électrique de la figure 2 dans lequel le circuit électrique est un circuit continu,
- la figure 7 illustre schématiquement une configuration alternative pour le deuxième convertisseur équipant le circuit illustré sur la figure 2, mais ne faisant pas parti de l'invention , selon la formulation des revendications.

Des parties identiques, similaires ou équivalentes des différentes figures portent les mêmes références numériques de façon à faciliter le passage d'une figure à l'autre.

## EXPOSÉ DÉTAILLÉ DE MODES DE RÉALISATION PARTICULIERS

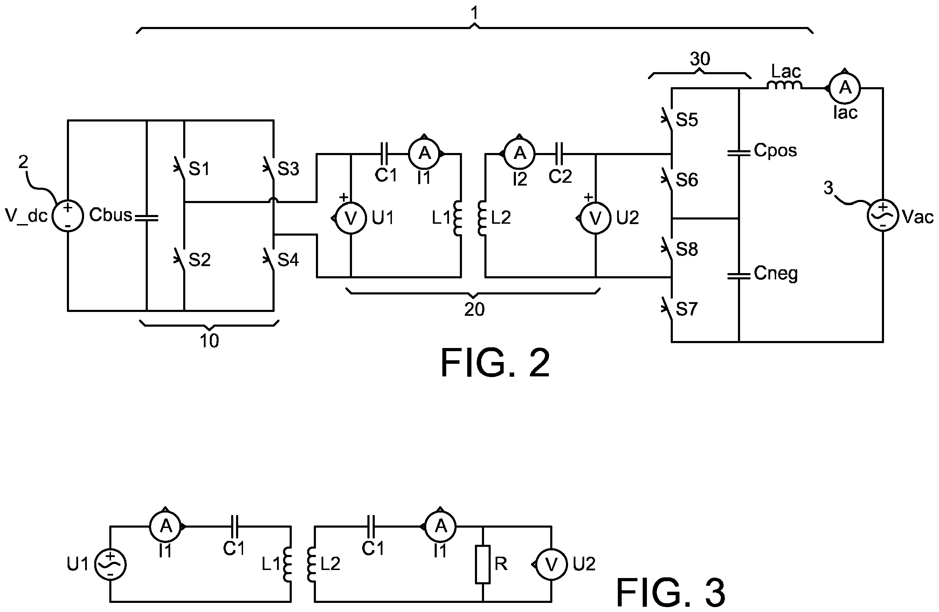

La figure 2 illustre schématiquement un circuit 1 électrique transformateur reliant un appareillage électrique 2, tel qu'un générateur d'énergie renouvelable ou un système de stockage d'énergie, à un réseau électrique 3.

Un tel circuit 1 électrique transformateur comporte :

- un premier convertisseur 10 en tension adapté pour connecter l'équipement électrique 2 à une partie du circuit 1 fonctionnant avec une tension alternative de fréquence $f0$,
- un transformateur 20 relié au premier convertisseur 10 en tension et configuré pour réaliser une adaptation d'amplitude entre la tension de l'équipement électrique 2 et celle du réseau électrique 3, ledit transformateur 20 comportant une première bobine L1, reliée au premier convertisseur 10, et une deuxième bobine L2 couplée magnétiquement à la première bobine L1 et un premier et un deuxième condensateur C1, C2 associés respectivement à la première et à la deuxième bobine L1, L2 de manière à former avec la bobine correspondante un circuit résonnant à la fréquence $f0$,
- un deuxième convertisseur 30 relié à la deuxième bobine L2 et au réseau électrique 3 et qui est configuré pour connecter ladite deuxième bobine L2 au réseau électrique 3.

Afin d'illustrer les différents emplacements de mesure des tensions du circuit électrique 1 et des courants qui le traverse, le circuit illustré sur la figure 2 montre des ampèremètres I1, I2, Iac et des voltmètres U1, U2.

Sur la figure 2, l'équipement électrique 2 est une source de tension continue dont la tension est notée Vdc. Bien entendu, le circuit illustré sur la figure 2 étant bidirectionnel, l'équipement électrique 2 peut également être une charge électrique ou bien être tour à tour une source et une charge, sans que l'on sorte du cadre de l'invention.

Le premier convertisseur 10 comporte une première capacité Cbus mis en parallèle avec l'équipement électrique 2 ceci pour filtrer les perturbations que pourrait introduire la conversion offerte par le premier convertisseur 10. Le premier convertisseur 10 comporte également un circuit de commutation comprenant quatre interrupteurs S1, S2, S3, S4 de manière à permettre une adaptation entre la tension continue de l'équipement électrique 2 et la tension alternative de fréquence $f0$ du transformateur 20. Pour se faire, les couples d'interrupteurs S1/S2 et S3/S4 sont ouverts par alternance à la fréquence $f0$ de manière à alterner la polarisation de la connexion entre l'équipement électrique 2 et le transformateur 20. Une telle commande des interrupteurs S1 à S4 est classique pour obtenir des conversions d'une tension continue en une tension alternative, d'une tension alternative en tension continue ou encore une conversion bidirectionnelle tension continue-tension alternative.

Le transformateur 20 permet de faire interface entre le premier et le deuxième convertisseur 10, 30 ceci en offrant une adaptation d'amplitude entre la tension de l'équipement électrique 2 et la tension du réseau électrique 3. Afin d'optimiser le rendement du circuit 1 tout en assurant une bonne isolation galvanique entre l'équipement électrique et le réseau électrique, le transformateur est un transformateur faiblement couplé, c'est-à-dire que le couplage magnétique entre la première bobine et la deuxième bobine est inférieur à 0,7 et peut être de l'ordre, voire inférieur de 0,5, et la première et la deuxième bobine sont chacune associée avec la capacité correspondante pour former un circuit résonnant à la fréquence $f0$.

Un tel transformateur 20 faiblement couplé peut être obtenu par l'utilisation d'un transformateur du type dans l'air, c'est-à-dire ne comportant pas de noyau magnétique entre les deux bobines. Ainsi, le couplage entre la première et la deuxième bobine L1, L2 se fait dans « l'air» puisque le noyau magnétique est remplacé par un espace vide.

Le principe de fonctionnement du transformateur 20 est illustré sur la figure 3. En effet, la première bobine L1 avec le premier condensateur C1 forme un premier circuit résonnant et la deuxième bobine L2 avec le deuxième condensateur C2 forme un deuxième circuit résonnant, ces deux circuits résonnants étant de fréquence de résonnance f0. Ces deux circuits doivent donc respecter l'équation suivante :

$$(2) \qquad f0 = \frac{\omega_0}{2\pi} = \frac{1}{2\pi\sqrt{L1 \cdot C1}} = \frac{1}{2\pi\sqrt{L2 \cdot C2}}$$

Avec $f0$ la fréquence de résonnance, $\omega 0$ la pulsation à la résonnance, L1, L2 les inductances respectives de la première et la deuxième bobines L1, L2 et C1, C2 les capacités respectives du premier et deuxième circuit résonant.

Ainsi, il peut être déduit les relations suivantes entre la tension U1 et les courant I1 et I2 :

$$(3) \qquad U1 = I1 \cdot \left(\frac{1}{jC1\omega_0} + jL1\omega_0\right) + j \cdot M\omega_0 \cdot I2$$

$$(4) \qquad I2 = \frac{U1}{j \cdot M\omega_0}$$

De ce fait, on peut voir que le transformateur fonctionne comme une source de courant avec l'amplitude de I2 qui peut être contrôlée par U1.

Le circuit étant symétrique, il peut être déduit de la relation (1) les relations suivantes entre la tension U2 et les courants I1 et I2 :

$$(5) \qquad U2 = R \cdot I2 = I2 \cdot \left(\frac{1}{jC1\omega_0} + jL1\omega_0\right) + j \cdot M\omega_0 \cdot I1$$

$$(6) \qquad U2 = R \cdot I2 = \frac{U1}{j \cdot M\omega_0} = j \cdot M\omega_0 \cdot I1$$

$$(7) \qquad I1 = \frac{U2}{j \cdot M\omega_0} = -R\frac{U1}{M^2\omega_0^2}$$

De cette manière, le fonctionnement du transformateur en tant que source de courant est réversible. Il est possible de contrôler I1 par U2 et I2 par U1 dans une configuration dans laquelle les couples U1/I1 et U2/I2 sont en phase, c'est-à-dire avec un comportement de dipôle résistif.

On notera également que le faible couplage permet de limiter les contraintes quant au caractère sinusoïdal des courants I1 et I2. Il est ainsi possible de limiter les étages de conversion pour le premier et pour le deuxième convertisseur 10, 30.

La deuxième bobine L2 est reliée au deuxième convertisseur 30. Le deuxième convertisseur, de manière à permettre la connexion de la deuxième bobine au réseau électrique 3, comporte quatre interrupteurs S5, S6, S7, S8 et deux capacités Cpos, Cneg montées en parallèle de ces interrupteurs S5, S6, S7, S8.

Les interrupteurs S5, S6, S7, S8 du deuxième convertisseur 30 sont agencés de manière à permettre une connexion de la deuxième bobine L2 avec le réseau électrique 3 lorsque les interrupteurs S5, S7 sont fermés et les interrupteurs S6, S8 sont ouverts et pour isoler le réseau électrique 3 de la deuxième bobine L2 lorsque les interrupteurs S5, S7 sont ouverts et les interrupteur S6, S8 sont fermés.

Pour obtenir un tel agencement, la deuxième bobine L2 est reliée au réseau électrique par l'intermédiaire des interrupteurs S5 et S7 avec une mise en parallèle avec les deux condensateurs Cpos, Cneg. Les interrupteurs S6, S8 quant à eux relient les deux bornes de la deuxième bobine L2 de manière à la court-circuiter. Dans la configuration illustrée sur la figure 2, sans que cela ne soit nécessaire pour le fonctionnement du circuit électrique 1, la borne commune des interrupteurs S8, S6 est connectée à la borne commune entre les condensateurs Cneg, Cpos.

Les cellules de commutation S5/S6 et S8/S7 sont connectés en tête bêche. Si ces cellules de commutation S5/S6 et S8/S7 sont polarisées alors leurs bornes négatives sont connectées ensemble ou leurs bornes positives sont connectées ensemble.

Le réseau électrique 3 est connecté aux interrupteurs S5, S7 et aux condensateurs Cneg, Cpos au travers de l'inductance Lac de manière à filtrer une partie du bruit à la fréquence *f0* résiduelle de la conversion fournie par le deuxième convertisseur 30. Le choix du positionnement de Lac n'est pas restrictif, elle peut être positionnée entre S7 et le réseau électrique ou être scindée en deux inductances reliant S5 au réseau électrique 3 pour la première et S7 au réseau électrique pour la deuxième.

La commande des interrupteurs S5, S6, S7, S8 est réalisé de manière indépendante de l'état de la tension du réseau électrique et du courant dans la deuxième bobine L2, c'est-à-dire que le deuxième convertisseur fonctionne en boucle ouverte.

Ainsi, les interrupteurs S5, S6, S7, S8 forme un système de découpage adapté pour fournir à la deuxième bobine L2 une tension alternative de fréquence fondamentale *f0* et proportionnelle à la tension du réseau électrique résultante d'un filtre passe bas, la commande dudit système de découpage étant indépendante de l'état des tensions du réseau électrique 3 et de l'équipement électrique 2.

$$T = \frac{1}{f0}$$

De cette manière, pour une période de , on peut résumer la commande des interrupteurs S5, S6, S7, S8 comme suit :

- pour $0<t<\frac{1}{2}T$, S5 et S7 fermés et S6 et S8 ouverts,
- pour $\frac{1}{2}T<t<T$, S5 et S7 ouverts et S6 et S8 fermés.

Ainsi, dans la configuration S5 et S7 fermés et S6 et S8 ouverts et en considérant les équations (2) à (7) du transformateur 20 décrites précédemment, notamment l'équation (7), il peut en être déduit que :

$$(8) \qquad I1(t) = \frac{Vac(t)}{M\omega_O} \cdot \frac{2}{\pi} \cdot \sin(\omega_O \cdot t - \frac{\pi}{4})$$

La tension Vac(t) pouvant s'écrire comme suit $Vac(t) = Vac \cdot \sin(\omega_2 \cdot t)$, l'équation (8) peut s'écrire :

$$(9) \qquad I1(t) = \frac{Vac}{M\omega_O} \cdot \frac{2}{\pi} \cdot \sin(\omega_0 \cdot t - \frac{\pi}{4}) \cdot \sin(\omega_2 \cdot t)$$

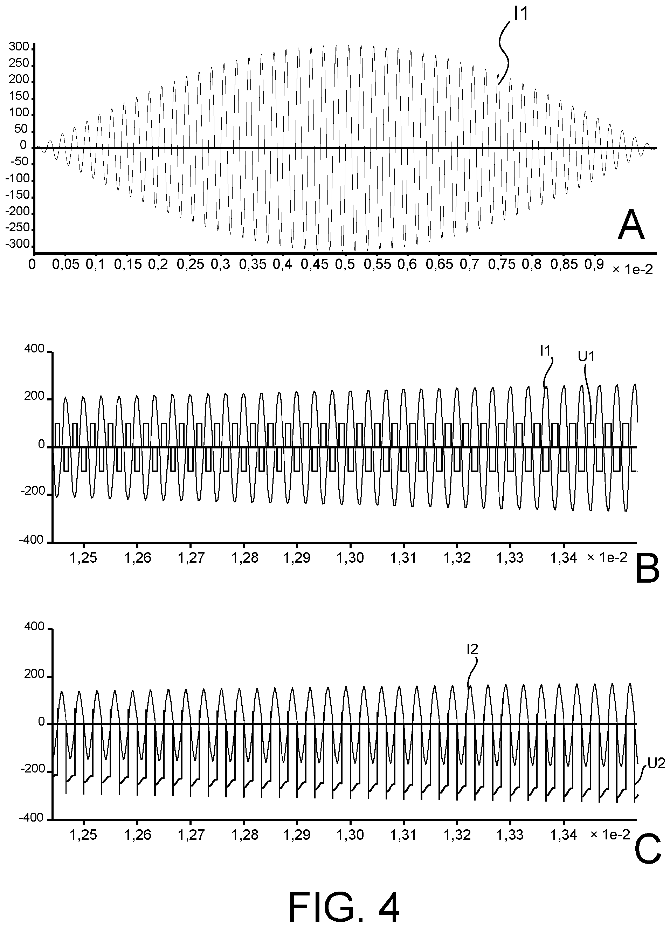

De cette manière, le transformateur 20 fonctionne comme une source de courant fournissant un courant I1 dont l'amplitude est proportionnelle à Vac avec une modulation à la fréquence *f0*. C'est ce dernier courant qui est illustré sur la figure 4A.

Avec le premier convertisseur 10 et ses interrupteurs S1, S2, S3, S4, la phase de la tension U1 par rapport au courant I1 peut être controlée. Or, comme le montre l'équation (4) introduite précédemment, le courant I2 est proportionnel à U2 avec un déphasage de π/4. Ainsi, si l'on contrôle U1 pour qu'elle soit en opposition de phase avec I1 comme illustré dans la figure 4B, la modulation de la tension U1 permet de contrôler l'amplitude du courant I2 et d'obtenir un déphasage nul entre le courant I2 et la tension U2. L'amplitude du courant Iac résulte donc de l'amplitude du courant I2, la tension U2 étant en phase avec I2, comme illustré sur la figure 4C, et les condensateurs Cpos, Cneg associés à l'inductance Lac agissant en tant que filtre passe bas. On notera qu'avec une telle commande des interrupteurs S1, S2, S3, S4, la commutation des interrupteurs S5, S6, S7, S8 à lieu à 0 courant et donc avec de très faibles pertes.

Il est donc possible, avec un tel circuit électrique de transformation de contrôler le courant Iac dans le réseau électrique 3.

De plus, le circuit illustré sur la figure 3 étant bidirectionnel, selon un principe similaire, il est possible d'alimenter un équipement électrique 2 du type une charge électrique avec le réseau électrique 3. Il suffit pour cela de contrôler la tension U1 pour quelle soit en phase avec I1 pour fonctionner en tant que générateur vis-à-vis du réseau, ou de contrôler la tension U1 pour quelle soit en opposition de phase avec I1 pour fonctionner en tant que charge vis-à-vis du réseau.

On peut également noter que, puisque le courant I1 est dépendant de U2 et que I2 est dépendant de U1, il est possible en équipant le circuit électrique 1 de systèmes de mesure que du seul côté de l'équipement électrique 2, de connaître l'état de du circuit électrique 1 du côté du réseau électrique 3.

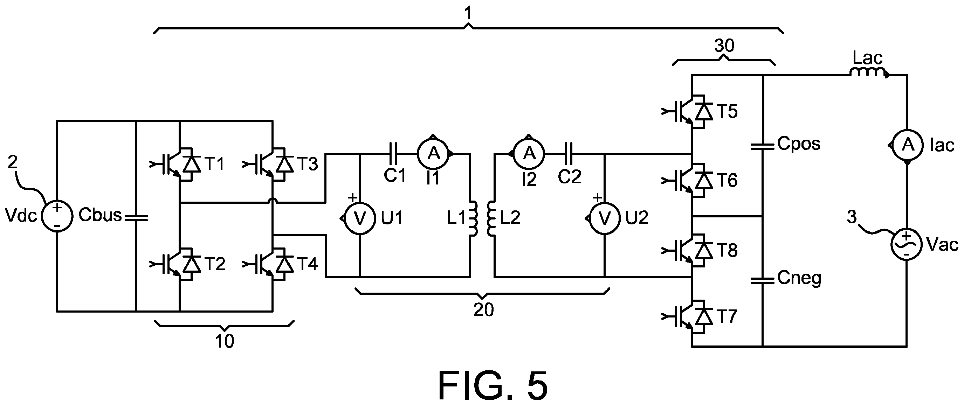

La figure 5 illustre schématiquement un exemple de réalisation d'un circuit 1 selon l'invention dans lequel chaque interrupteur S1, S2, S3, S4, S5, S6, S7, S8 est remplacé par un Transistor bipolaire à grille isolée T1, T2, T3, T4, T5, T6, T7, T8, plus connu sous son sigle anglais IGBT, et une diode montée antiparallèle à l'IGBT. Une telle utilisation d'un IGBT et d'une diode montés ensemble dans une configuration antiparallèle pour fonctionner en tant qu'interrupteur étant connue de l'homme du métier, cette configuration n'est pas explicitée plus avant dans ce document. Il est néanmoins à noter qu'avec une telle configuration, la fréquence *f0* peut typiquement être fixée à une valeur de 15kHz offrant ainsi un haut rendement de transformation, et ce malgré des tensions de fonctionnement possiblement élevées des cellules de commutation T5/T6 et T7/T8 formées par les couples IGBT/diode T5, T6, T7, T8 .

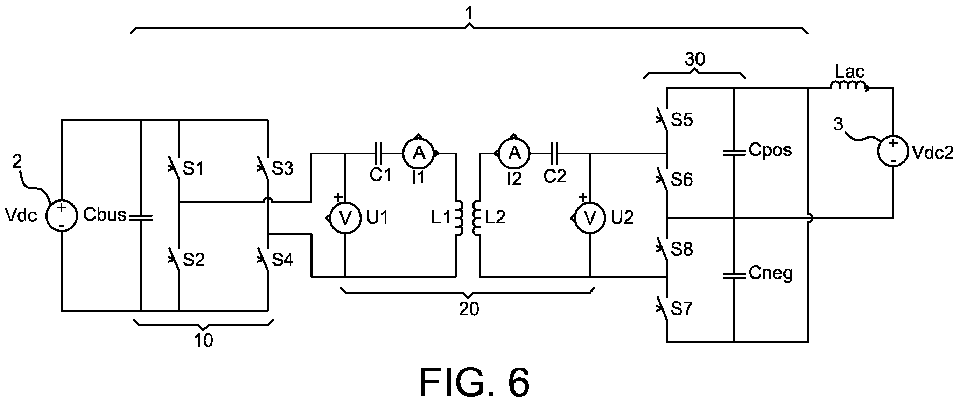

La figure 6 illustre un exemple de circuit 1 selon l'invention dans lequel le réseau électrique 3 est un réseau continu. Le circuit 1 selon cet exemple de réalisation se différencie du circuit 1 illustré sur la figure 2 en ce que le réseau électrique 3 est branché en parallèle avec les capacités Cpos et Cneg. Dans le cas de la figure 6, la connexion suppose que si les cellules de commutation S5/S6 et S7/S8, formées par les interrupteur S5, S6, S7, S8, sont polarisés, elles soient reliés entre elles par leur borne négative.

De cette manière pour un équipement électrique 1 qui est une source électrique, le réseau électrique polarisé est alimenté par un courant ou une tension de même polarité. De cette manière, avec un tel branchement, le réseau électrique est alimenté ou chargé par un courant rendu sensiblement continu par le filtre formé par la capacité Cpos, Cneg et l'inductance Lac, selon que le transfert de puissance avec l'équipement 1 soit positif ou négatif.

De même, lorsque l'équipement électrique 2 est une charge ou une source électrique non contrôlée, le circuit électrique 1 permet d'adapter la valeur de tension vue par l'équipement électrique, selon un principe similaire à celui explicité pour le circuit illustré sur la figure 2.

Selon une variante de ce mode de réalisation, non illustrée, le deuxième convertisseur 30 peut comporter, selon un principe similaire à celui du premier convertisseur 10, un circuit de commutation comprenant quatre interrupteurs quatre quadrants de manière à permettre une adaptation entre la tension continue du réseau électrique et la tension alternative de fréquence *f0* du transformateur 20. De cette manière, la tension continue fournie par le réseau électrique 3 peut être découpée pour fournir à la deuxième bobine L2 une tension alternative de fréquence *f0,* avec une amplitude toujours proportionnelle à Vac, comme expliqué précédemment

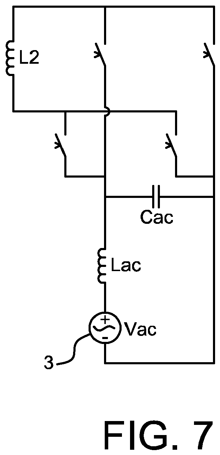

La figure 7 illustre seulement à titre d'exemple , et ne faisant pas parti de l'invention, une variante du deuxième convertisseur 20 illustré sur la figure 2. Les interrupteurs d'un tel deuxième convertisseur 20 selon cette variante peuvent être commandés de la même façon que les interrupteurs S5, S6, S7, S8 de manière à permettre dans une première position une connexion de la deuxième bobine L2 avec le réseau électrique 3 et dans une deuxième position d'isoler le réseau électrique 3 de la deuxième bobine L2. On peut noter que dans une telle variante, un seul condensateur Cac est mis en œuvre.

## Revendications

1. Circuit (1) électrique transformateur pour relier un équipement électrique (2), tel qu'un générateur à base d'énergie renouvelable ou un système de stockage d'énergie, à un réseau électrique (3), ledit circuit comportant :

    - un premier convertisseur (10) en tension adapté pour connecter l'équipement électrique (20) à une partie du circuit électrique (1) fonctionnant avec une tension alternative de fréquence *f0*,
    - un transformateur (20) relié au premier convertisseur en tension et configuré pour réaliser une adaptation d'amplitude entre la tension de l'équipement électrique (2) et celle du réseau électrique (3), ledit transformateur (20) comportant une première bobine (L1) reliée au premier convertisseur (10) et une deuxième bobine (L2) couplée magnétiquement à la première bobine (L1), lesdites première et deuxième bobines (L1,L2) étant agencées solidaires en déplacement, le transformateur (20) formant la partie du circuit (1) fonctionnant avec une tension alternative de fréquence *f0,*
    - un deuxième convertisseur (20) en tension configuré pour connecter ladite deuxième bobine (L2) au réseau électrique (3),

        ledit circuit (1) **étant caractérisé en ce que** le transformateur (20) est un transformateur faiblement couplé, c'est-à-dire que le couplage magnétique entre la première bobine (L1) et la deuxième bobine (L2) étant inférieur à 0,7,
        et **en ce que** le transformateur (20) comporte un premier et un deuxième condensateur (C1, C2) associés respectivement à la première et à la deuxième bobine (L1, L2) de manière à ce que le premier condensateur (C1) forme avec la première bobine (L1) un premier circuit résonnant à la fréquence *f0* et que le deuxième condensateur (C2) forme avec la deuxième bobine (L2) un deuxième circuit résonnant à la fréquence *f0,* dans lequel le deuxième convertisseur comporte un premier, un deuxième, un troisième et un quatrième interrupteur (S5, S6, S7, S8) connectés en série et deux capacités (Cpos, Cneg) connectées en séries, les deux capacités étant montées en parallèle des premier au quatrième interrupteurs (S5, S6, S7, S8), la deuxième bobine L2 étant reliée au réseau électrique par l'intermédiaire des premier et troisième interrupteurs (S5, S7) avec une mise en parallèle avec les deux condensateurs (Cpos, Cneg), les deuxième et quatrième interrupteur (S6, S8) reliant les deux bornes de la deuxième bobine (L2) de manière à la court-circuiter,

dans lequel les premier au quatrième interrupteurs sont commandé de manière indépendante de l'état de la tension du réseau électrique et du courant dans la deuxième bobine (L2), c'est-à-dire que le deuxième convertisseur fonctionne en boucle ouverte.

2. Circuit (1) selon la revendication 1 dans lequel le transformateur (20) est un transformateur du type dans l'air.

3. Circuit (1) selon l'une quelconque des revendications 1 à 2, dans lequel la fréquence $f0$ est une fréquence supérieure à 1 kHz préférentiellement supérieure à 5 kHZ, voire 10 kHz.

4. Circuit (1) selon l'une quelconque des revendications 1 à 3, dans lequel l'équipement électrique (2) est un équipement électrique fonctionnant avec une tension continue qui est soit une charge électrique, telle qu'une batterie, soit une source électrique, tel qu'un générateur à base d'énergie renouvelable, soit les deux, telle qu'une batterie adaptée pour transmettre de l'énergie au réseau électrique (3), le premier convertisseur (10) étant :

- dans le cas où l'équipement électrique (2) est une charge électrique, un convertisseur tension alternative en tension continue avec le transformateur (20) en entrée et l'équipement électrique (2) en sortie,
- dans le cas où l'équipement électrique (2) est un générateur, un onduleur avec l'équipement électrique en entrée et le transformateur (20) en sortie,
- dans le cas où l'équipement électrique (2) peut fonctionner aussi bien en source qu'en charge, un convertisseur tension alternative en tension continue bidirectionnelle.

5. Circuit (1) selon l'une quelconque des revendications 1 à 4 dans lequel l'équipement électrique (2) est un équipement électrique qui est soit une charge électrique, telle qu'une batterie, soit une source électrique, tel qu'un générateur à base d'énergie renouvelable, soit les deux, telle qu'une batterie adaptée pour transmettre de l'énergie au réseau électrique (3),

et dans lequel le réseau électrique (3) est un réseau électrique alternatif de fréquence $f2$, le deuxième convertisseur (30) étant adapté pour :

- dans le cas où l'équipement électrique (2) est une charge électrique, convertir une tension de fréquence $f2$ en une tension de fréquence $f0$, le deuxième convertisseur (30) étant connecté en entrée au réseau électrique (3) et en sortie à la deuxième bobine (L2),
- dans le cas où l'équipement électrique (2) est un générateur, convertir une tension de fréquence $f0$ en une tension $f2$, le deuxième convertisseur (30) étant connecté en entrée à la deuxième bobine (L2) et en sortie au réseau électrique (3),
- dans le cas où l'équipement électrique (2) peut fonctionner aussi bien en source qu'en charge, convertir de manière bidirectionnelle une tension de fréquence $f2$ en une tension de fréquence $f0$.

6. Circuit (1) selon la revendication 5 dans lequel le deuxième convertisseur (30) comprend un système de découpage adapté pour fournir à la deuxième bobine (L2) une tension alternative de fréquence fondamentale $f0$ et proportionnelle à la tension du réseau électrique résultante d'un filtre passe bas, la commande dudit système de découpage étant indépendante de l'état des tensions du réseau électrique (3) et de l'équipement électrique (2).

7. Circuit (1) selon l'une quelconque des revendications 1 à 4, dans lequel l'équipement électrique (2) est un équipement électrique qui est soit une charge électrique, telle qu'une batterie, soit une source électrique, tel qu'un générateur à base d'énergie renouvelable, soit les deux, telle qu'une batterie adaptée pour transmettre de l'énergie au réseau électrique (1),

et dans lequel le réseau électrique (1) est un réseau électrique de tension continue, le deuxième convertisseur (20) étant :

- dans le cas où l'équipement électrique (2) est une charge électrique, un onduleur adapté pour fournir à partir de la tension continue du réseau électrique (3) une tension alternative de fréquence $f0$ à la deuxième bobine (L2),
- dans le cas où l'équipement est une source électrique, convertir une tension de fréquence $f0$ en une tension continue, le deuxième convertisseur étant connecté en entrée à la deuxième bobine (L2) et en sortie au réseau électrique,

- dans le cas où l'équipement électrique (2) peut fonctionner aussi bien en tant que source électrique qu'en tant que charge électrique, adapté pour une conversion bidirectionnelle d'une tension continue en tension alternative de fréquence *f0*.

8. Circuit (1) selon la revendication 7, dans lequel le deuxième (30) convertisseur comprend un système de découpage agencé pour relier le réseau électrique (3) et la deuxième bobine (L2) uniquement lors des alternances positives de la tension alternative de fréquence *f0* et un filtre passe-bas adapté pour filtrer au moins partiellement les tensions de fréquence *f0*.

9. Installation électrique comportant :

- un équipement électrique (2) tel qu'un générateur à base d'énergie renouvelable ou un système de stockage d'énergie,
- et un circuit (1) électrique transformateur relié à l'équipement électrique (2) ceci pour relier l'équipement électrique (2) à un réseau électrique (3),

ladite installation **étant caractérisée en ce que** le circuit électrique (1) est un circuit électrique selon l'une quelconque des revendications 1 à 8.

## Patentansprüche

1. Elektrischer Transformatorschaltkreis (1) zum Anschließen einer elektrischen Einrichtung (2), wie etwa eines Generators auf Basis erneuerbarer Energien oder eines Energiespeichersystems, an ein Stromnetz (3), wobei der Schaltkreis enthält:

- einen ersten Spannungswandler (10), der geeignet ist, die elektrische Einrichtung (20) mit einem Teil des elektrischen Schaltkreises (1) zu verbinden, der mit einer Wechselspannung der Frequenz *f0* betrieben wird,
- einen Transformator (20), der mit dem ersten Spannungswandler verbunden und dazu ausgelegt ist, eine Amplitudenanpassung zwischen der Spannung der elektrischen Einrichtung (2) und derjenigen des Stromnetzes (3) zu bewirken, wobei der Transformator (20) eine erste Spule (L1), die mit dem ersten Wandler (10) verbunden ist, und eine zweite Spule (L2), die magnetisch mit der ersten Spule (L1) gekoppelt ist, enthält, wobei die erste und die zweite Spule (L1, L2) verschiebefest angeordnet sind, wobei der Transformator (20) den Teil des Schaltkreises (1) bildet, der mit einer Wechselspannung der Frequenz *f0* betrieben wird,
- einen zweiten Spannungswandler (20), der dazu ausgelegt ist, die zweite Spule (L2) mit dem Stromnetz (3) zu verbinden,

wobei der Schaltkreis (1) **dadurch gekennzeichnet ist, dass** der Transformator (20) ein schwach gekoppelter Transformator ist, d. h. dass die magnetische Kopplung zwischen der ersten Spule (L1) und der zweiten Spule (L2) kleiner als 0,7 ist,
und dass der Transformator (20) einen ersten und einen zweiten Kondensator (C1, C2) aufweist, die der ersten bzw. der zweiten Spule (L1, L2) zugeordnet sind, so dass der erste Kondensator (C1) mit der ersten Spule (L1) einen ersten Resonanzkreis mit der Frequenz *f0* bildet und der zweite Kondensator (C2) mit der zweiten Spule (L2) einen zweiten Resonanzkreis mit der Frequenz *f0* bildet,
wobei der zweite Wandler einen ersten, einen zweiten, einen dritten und einen vierten Schalter (S5, S6, S7, S8) aufweist, die in Reihe geschaltet sind, sowie zwei in Reihe geschaltete Kapazitäten (Cpos, Cneg), wobei die beiden Kapazitäten parallel zum ersten bis vierten Schalter (S5, S6, S7, S8) geschaltet sind, wobei die zweite Spule (L2) über den ersten und den dritten Schalter (S5, S7) unter Parallelschaltung mit den beiden Kondensatoren (Cpos, Cneg) an das Stromnetz angeschlossen ist, wobei der zweite und der vierte Schalter (S6, S8) die beiden Anschlüsse der zweiten Spule (L2) so verbinden, dass diese kurzgeschlossen wird,
wobei der erste bis vierte Schalter unabhängig vom Spannungszustand des Stromnetzes und vom Strom in der zweite Spule (L2) gesteuert wird, d. h. der zweite Wandler arbeitet im offenen Regelkreis.

2. Schaltkreis (1) nach Anspruch 1,
wobei der Transformator (20) ein Lufttransformator ist.

3. Schaltkreis (1) nach einem der Ansprüche 1 bis 2,
wobei die Frequenz *f0* eine Frequenz größer als 1 kHz, vorzugsweise größer als 5 kHZ oder sogar 10 kHz ist.

4. Schaltkreis (1) nach einem der Ansprüche 1 bis 3,
wobei es sich bei der elektrischen Einrichtung (2) um eine elektrische Einrichtung handelt, die mit Gleichspannung betrieben wird und entweder eine elektrische Last, wie eine Batterie, oder eine elektrische Quelle, wie ein Generator auf Basis erneuerbarer Energien, oder beides ist, wie eine Batterie, die zur Übertragung von Energie an das Stromnetz (3) geeignet ist, wobei es sich bei dem ersten Wandler (10)

- dann, wenn die elektrische Einrichtung (2) eine elektrische Last ist, um einen Wechselspannungs-/Gleichspannungswandler mit dem Transformator (20) am Eingang und der elektrischen Einrichtung (2) am Ausgang handelt,
- dann, wenn die elektrische Einrichtung (2) ein Generator ist, um einen Wechselrichter mit der elektrischen Einrichtung am Eingang und dem Transformator (20) am Ausgang handelt,
- dann, wenn die elektrische Einrichtung (2) sowohl als Quelle als auch als Last betrieben werden kann, um einen bidirektionalen Wechselspannungs-/Gleichspannungswandler handelt.

5. Schaltkreis (1) nach einem der Ansprüche 1 bis 4,

wobei es sich bei der elektrischen Einrichtung (2) um eine elektrische Einrichtung handelt, die entweder eine elektrische Last, wie etwa eine Batterie, oder eine elektrische Quelle, wie etwa ein Generator auf Basis erneuerbarer Energien, oder beides ist, wie etwa eine Batterie, die geeignet ist, Energie an das Stromnetz (3) zu übertragen,
und wobei das Stromnetz (3) ein Wechselstromnetz der Frequenz *f2* ist, wobei der zweite Wandler (30) dazu geeignet ist,

- dann, wenn die elektrische Einrichtung (2) eine elektrische Last ist, eine Spannung der Frequenz *f2* in eine Spannung der Frequenz *f0* umzuwandeln, wobei der zweite Wandler (30) am Eingang mit dem Stromnetz (3) und am Ausgang mit der zweiten Spule (L2) verbunden ist,
- dann, wenn die elektrische Einrichtung (2) ein Generator ist, eine Spannung der Frequenz *f0* in eine Spannung *f2* umzuwandeln, wobei der zweite Wandler (30) am Eingang mit der zweiten Spule (L2) und am Ausgang mit dem Stromnetz (3) verbunden ist,
- dann, wenn die elektrische Einrichtung (2) sowohl als Quelle als auch als Last betrieben werden kann, eine Spannung der Frequenz *f2* in eine Spannung der Frequenz *f0* bidirektional umzuwandeln.

6. Schaltkreis (1) nach Anspruch 5,
wobei der zweite Wandler (30) eine Zerhackereinrichtung aufweist, die dazu ausgelegt ist, an die zweite Spule (L2) eine Wechselspannung mit der Grundfrequenz *f0* zu liefern, die proportional zur Netzspannung ist, die sich aus einem Tiefpassfilter ergibt, wobei die Steuerung der Zerhackereinrichtung unabhängig vom Zustand der Spannungen des Stromnetzes (3) und der elektrischen Einrichtung (2) ist.

7. Schaltkreis (1) nach einem der Ansprüche 1 bis 4,

wobei es sich bei der elektrischen Einrichtung (2) um eine elektrische Einrichtung handelt, die entweder eine elektrische Last, wie etwa eine Batterie, oder eine elektrische Quelle, wie etwa ein Generator auf Basis erneuerbarer Energien, oder beides ist, wie etwa eine Batterie, die dazu geeignet ist, Energie an das Stromnetz (1) zu übertragen,
und wobei das Stromnetz (1) ein elektrisches Gleichspannungsnetz ist, wobei der zweite Wandler (20)

- dann, wenn die elektrische Einrichtung (2) eine elektrische Last ist, ein Wechselrichter ist, der dazu geeignet ist, von der Gleichspannung des Stromnetzes (3) eine Wechselspannung der Frequenz *f0* an die zweite Spule (L2) zu liefern,
- dann, wenn die Einrichtung eine elektrische Quelle ist, eine Spannung der Frequenz *f0* in eine Gleichspannung umwandelt, wobei der zweite Wandler am Eingang mit der zweiten Spule (L2) und am Ausgang mit dem Stromnetz verbunden ist,
- dann, wenn die elektrische Einrichtung (2) sowohl als elektrische Quelle als auch als elektrische Last betrieben werden kann, zur bidirektionalen Umwandlung einer Gleichspannung in eine Wechselspannung der Frequenz *f0* ausgelegt ist.

**8.** Schaltkreis (1) nach Anspruch 7,
wobei der zweite Wandler (30) eine Zerhackereinrichtung aufweist, die dazu angeordnet ist, das Stromnetz (3) und die zweite Spule (L2) nur während positiver Wechsel der Wechselspannung der Frequenz *f0* zu verbinden, sowie ein Tiefpassfilter, das dazu geeignet ist, die Spannungen der Frequenz *f2* zumindest teilweise herauszufiltern.

**9.** Elektrische Anlage, enthaltend:

- eine elektrische Einrichtung (2), wie etwa einen Generator auf Basis erneuerbarer Energien oder ein Energiespeichersystem,
- und einen elektrischen Transformatorschaltkreis (1), der an die elektrische Einrichtung (2) angeschlossen ist, um die elektrische Einrichtung (2) an ein Stromnetz (3) anzuschließen,

wobei die Anlage **dadurch gekennzeichnet ist, dass** der Schaltkreis (1) ein Schaltkreis nach einem der Ansprüche 1 bis 8 ist.

**Claims**

**1.** An electric transformer circuit (1) for connecting electrical equipment (2), such as a renewable energy-based generator or an energy storage system, to an electric grid (3), said circuit including:

- a first voltage converter (10) suitable for connecting the electrical equipment (20) to part of the electric circuit (1) operating with an AC voltage with frequency *f0*,
- a transformer (20) connected to the first voltage converter and configured to perform an amplitude adaptation between the voltage of the electrical equipment (2) and that of the electric grid (3), said transformer (20) including a first coil (L1) connected to the first converter (10) and a second coil (L2) magnetically coupled to the first coil (L1), said first and second coils (L1, L2) being arranged secured in movement, the transformer (20) forming the part of the electric circuit (1) working with an AC voltage with frequency *f0*,
- a second converter (20) configured to connect said second coil (L2) to the electric grid (3),

said circuit (1) **being characterized in that** the transformer (20) is a weakly coupled transformer, the magnetic coupling between the first coil (L1) and the second coil (L2) being less than 0.7,
and **in that** the transformer (20) includes a first and second capacitor (C1, C2) respectively associated with the first and second coils (L1, L2) so as the first capacitor (C1) forms with the first coil (L1) a first circuit resonating at frequency *f0* and the second capacitor (C2) forms with the second coil (L2) a second circuit resonating at frequency f0,
wherein the second converter includes a first, a second, a third and a fourth switch (S5, S6 , S7, S8) connected in series and tow capacitor (Cpos, Cneg) connected in series, the two capacitor being arranged in parallel to the first to the fourth switches (S5, S6 , S7, S8), the second coil being connected to the electrical grid through the first and the third switches (S5, S7) with a parallel placement with the two capacitor (Cpos, Cneg), the second and fourth switches (S6, S7) connecting the two terminals of the second coil (L2) so as to short circuit the second coil,
wherein the first to the fourth switches are controlled independently regarding the state of the voltage of the electrical grid and the state of the current in the second coil (L2), i.e. the second converter is working in open loop.

**2.** The circuit (1) according to claim 1, wherein the transformer (20) may be a transformer of the air type.

**3.** The circuit (1) according to any one of claims 1 to 2, wherein the frequency *f0* is a frequency greater than 1 kHz, preferably greater than 5 kHz, or even greater than 10 kHz.

**4.** The circuit (1) according to any one of claims 1 to 3, wherein the electrical equipment (2) is an electrical equipment working with a DC voltage that is either an electric charge, such as a battery, or an electric power supply, such as a renewable energy-based generator, or both, such as a battery adapted to transmit energy to the electric grid (3), the first converter (10) being:

- in the case where the electrical equipment (2) is an electric charge, an AC to DC voltage converter with the transformer (20) at the input and the electrical equipment (2) at the output,

- in the case where the electrical equipment (2) is a generator, an inverter with the electrical equipment at the input and the transformer (20) at the output,
- in the case where the electrical equipment (2) can operate both as power supply and charge, an AC voltage to DC voltage bidirectional converter.

5. The circuit (1) according to any one of claims 1 to 4, wherein the electrical equipment (2) is an electrical equipment that is either an electric charge, such as a battery, or an electric power supply, such as a renewable energy-based generator, or both, such as a battery suitable for transmitting energy to the electric grid (3),
and wherein the electric grid (3) can be an AC electric grid with frequency $f2$, the second converter (30) being able to be adapted to:

- in the case where the electrical equipment (2) is an electric charge, convert a voltage with frequency $f2$ into a voltage with frequency $f0$, the second converter (30) being connected at the input to the electric grid (3) and at the output to the second coil (L2),
- in the case where the electrical equipment (2) is a generator, convert a voltage with frequency $f0$ into a voltage $f2$, the second converter (30) being connected at the input to the second coil (L2) and at the output to the electric grid (3),
- in the case where the electrical equipment (2) can operate both as a power supply and a charge, bidirectionally convert a voltage with frequency $f2$ into a voltage with frequency $f0$.

6. The circuit (1) according to claim 5, wherein the second converter (30) comprises a switching regulator system suitable for providing the second coil (L2) with an AC voltage with fundamental frequency $f0$ and proportional to the voltage of the electric grid resulting from a low-pass filter, the command of said switching regulator system being independent of the state of the voltages of the electric grid (3) and the electrical equipment (2).

7. The circuit (1) according to any one of claims 1 to 4, wherein the electrical equipment (2) is an electrical equipment that is either an electric charge, such as a battery, or an electric power supply, such as a renewable energy-based generator, or both, such as a battery suitable for transmitting energy to the electric grid (1),
and wherein the electric grid (1) is an AC electric grid, the second converter (20) being:

- in the case where the equipment (2) is an electric charge, an inverter suitable for providing, from the DC voltage of the electric grid (3), an AC voltage with frequency $f0$ to the second coil (L2),
- in the case where the equipment is an electric power supply, converting a voltage with frequency $f0$ into a DC voltage, the second converter being connected at the input to the second coil (L2) and at the output to the electric grid,
- in the case where the electrical equipment (2) can operate both as an electric power supply and an electric charge, suitable for a bidirectional conversion of a DC voltage into an AC voltage with frequency $f0$.

8. The circuit (1) according to claim 7, wherein the second converter (30) comprises a switching regulator system arranged to connect the electric grid (3) and the second coil (L2) only during positive alternations of the AC voltage with frequency $f0$ and a low-pass filter suitable for at least partially filtering the voltages with frequency $f0$.

9. An electric installation including:

- an electrical equipment (2) such as a renewable energy-based generator or an energy storage system, and
- an electric transformer circuit (1) connected to the electrical equipment (2), in order to connect the electrical equipment (2) to an electric grid (3),

said installation **being characterized in that** the removable device (1) is an electric circuit according to any one of claims 1 to 8.

FIG. 1

EP 3 007 349 B1

FIG. 2

FIG. 3

EP 3 007 349 B1

FIG. 4

FIG. 5

EP 3 007 349 B1

FIG. 6

EP 3 007 349 B1

FIG. 7

**RÉFÉRENCES CITÉES DANS LA DESCRIPTION**

**Documents brevets cités dans la description**

- WO 2012162581 A1